# EUROPÄISCHE PATENTSCHRIFT

(11) **EP 3 900 092 B1**
(45) Veröffentlichungstag und Bekanntmachung des Hinweises auf die Patenterteilung: **18.06.2025**
(21) Anmeldenummer: 19805181.5
(22) Anmeldetag: 12.11.2019
(51) Int. Cl.: H01M 8/04089, H01M 8/04119, H01M 8/0662, F04F 5/16, F04F 5/54, H01M 8/10

(54) **GAS-FLÜSSIGKEITSABSCHEIDER IN EINEM ANODENKREISLAUF EINER BRENNSTOFFZELLE ZUM ABSCHEIDEN VON ZUMINDEST EINEM FLÜSSIGEM BESTANDTEIL VON EINEM GASFÖRMIGEN BESTANDTEIL**
GAS LIQUID SEPARATOR IN AN ANODE CIRCUIT OF A FUEL CELL FOR SEPARATING AT LEAST ONE LIQUID PART FROM A GASEOUS PART
SÉPARATEUR DE LIQUIDE GAZEUX DANS UN CIRCUIT D'ANODE D'UNE PILE À COMBUSTIBLE POUR SÉPARER AU MOINS UNE PARTIE LIQUIDE D'UNE PARTIE GAZEUSE

(30) Priorität: 18.12.2018 DE 102018222096
(43) Veröffentlichungstag der Anmeldung: 27.10.2021
(73) Patentinhaber: Robert Bosch GmbH, 70442 Stuttgart (DE)
(72) Erfinder: KURZ, Michael, 73207 Plochingen (DE)
(86) Internationale Anmeldenummer: PCT/EP2019/080963
(87) Internationale Veröffentlichungsnummer: WO 2020/126222

(56) Entgegenhaltungen:
- JP-A- 2005 183 020
- JP-A- 2011 129 377
- KR-A- 20090 019 980

## Beschreibung

### Stand der Technik

Die vorliegende Erfindung betrifft einen Gas-Flüssigkeitsabscheider in einem Anodenkreislauf einer Brennstoffzelle zum Abscheiden von zumindest einem flüssigen Bestandteil von einem wgasförmigen Bestandteil, dem über einen Einlass ein Medium zugeführt wird, wobei eine Abscheidung zumindest des flüssigen Bestandteils des Mediums im wenigstens einen Behälter erfolgt, insbesondere zur Anwendung in einem Brennstoffzellensystem von Fahrzeugen mit einem Brennstoffzellenantrieb.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich wie bei der Einspritzung von flüssigem Kraftstoff gesteuert, sondern es wird das Gas aus mindestens einem Hochdrucktank entnommen und über eine Zuströmleitung eines Mitteldruckleitungssystems an eine integrierte Ventil-Strahlpumpeneinheit geleitet. Diese Ventil-Strahlpumpeneinheit führt das Gas über eine Verbindungsleitung eines Niederdruckleitungssystems zu einer Brennstoffzelle. Von der Brennstoffzelle wird ein Abgas, welches insbesondere aus unverbrauchten Wasserstoff und aus einem nicht aktiven Anteil, insbesondere Wasser und Stickstoff, besteht, über einen Rezirkulationspfad rezirkuliert.

Aus der DE 10 2014 220 891 A1 ist ein Gas-Flüssigkeitsabscheider bekannt, zum Abscheiden von einem flüssigen Bestandteil, insbesondere Wasser, wobei das Wasser im Folgenden als H₂O bezeichnet wird, von einem von einem gasförmigen Bestandteil, insbesondere Abgas, das von einer Brennstoffzelle abgegeben wird. Dieser Gas-Flüssigkeitsabscheider hat dabei wenigstens einen Behälter, insbesondere ein Gehäuse, in den das über ein Einbringrohr Abgas aus einem Anodenkreislauf des Brennstoffzellensystems zugeführt wird. In dem Behälter wird H₂O, das in dem Abgas enthalten ist, von dem Abgas abgeschieden. Danach wird das Abgas, das unter anderem Wasserstoff enthält, wobei der Wasserstoff im Folgenden als H₂ bezeichnet wird, über ein Auslassrohr zurückgeführt in den Anodenkreislauf. Weiterhin weist das Gehäuse einen Ablassanschluss auf, über den abgeschiedenes und gespeichertes H₂O aus dem Gehäuse zur Außenseite abgelassen wird.

Der aus der DE 10 2014 220 891 A1 bekannte Gas-Flüssigkeitsabscheider kann gewisse Nachteile aufweisen.

Zum einen durchströmt das Abgas aus dem Anodenkreislauf das Gehäuse derart, dass nur ein Teil des H₂O im Abgas, insbesondere im flüssigen Zustand, abgeschieden werden kann. Ein großer Teil des in das Gehäuse eingebrachten Abgases strömt über das Auslassrohr unverändert zurück in den Anodenkreislauf. Dabei wird immer ein erheblicher Anteil an H₂O, das beispielsweise aufgrund von Temperatur und Druckverhältnissen nur gasförmig vorliegt, zurück in den Anodenkreislauf gefördert. Des Weiteren findet zumindest nahezu keine Abscheidung von weiteren Bestandteilen aus dem Abgas statt, wie beispielsweise Stickstoff, wobei der Stickstoff im Folgenden als N₂ bezeichnet wird, und/oder Verunreinigungen. Dadurch entsteht in dem aus der DE 10 2014 220 891 A1 bekannten Gas-Flüssigkeitsabscheider der Nachteil dass das aus dem Gehäuse in den Anodenkreislauf zurückströmende gasförmige Medium nur zu einem Teil H₂ aufweist und ein Großteil die Bestandteile gasförmiges H₂O und/oder N₂ und/oder Verunreinigungen enthält und diese in den Anodenkreislauf des Brennstoffzellensystems zurück gefördert werden, Dadurch wird der Wirkungsgrad der Brennstoffzelle und somit des Brennstoffzellensystems reduziert und die Bestandteile des zurückgeförderten gasförmigen Mediums, bei denen es sich nicht um H₂ handelt können die Komponenten des Anodenkreislaufs und/oder die Brennstoffzelle und/oder eines Rohrleitungssystems beschädigen. Zum anderen muss mindestens eine zusätzliche Komponente im Anodenkreislauf des Brennstoffzellensystem angeordnet sein, um die weiteren Bestandteile H₂O und/oder N₂ und/oder Verunreinigungen aus dem Anodenkreislauf abzuführen, beispielsweise in Form eines Ablassventils.

Das Dokument KR 2009 0019980 A offenbart ein Brennstoffzellensystem mit einer Anodengasrückführung von Anodenwasserstoff, wobei eine Strahlpumpe verwendet wird, um einen niedrigen Druck über eine Membran aufzubauen, der nur für den Wasserstoff durchlässig ist. Ein Teil der Anodengasrückführung wird einem Membranabscheider zugeführt, in dem der Wasserstoff durch die Membran strömt und Stickstoff und Wasser zurückbleiben.

Das Dokument JP 2011 129377 A offenbart eine Anodengasrückführung für eine Brennstoffzelle, bei der ein Membranabscheider verwendet wird, um Stickstoff von einem Rückführungsstrom abzutrennen. Ebenfalls wird die Verwendung einer Strahlpumpe offenbart, die dafür geeignet ist, einen Niedrigdruck auf eine Rückführleitung zu erzeugen.

Das Dokument JP 2005 183020 A offenbart ein Brennstoffzellen-Anodenrecyclingsystem, bei dem ein Membran-Dampf-Flüssigkeits-Separator verwendet wird, um Wasser vom Wasserstoff in einem Anodenrecyclinggas zu trennen.

### Offenbarung der Erfindung

### Vorteile der Erfindung

Bezugnehmend auf Anspruch 1 wird ein Gas-Flüssigkeitsabscheider vorgeschlagen, bei dem ein Behälter einen Innenraum und einen zentralen Strömungsbereich aufweist, die mittels einer Membran voneinander getrennt sind, wobei der Strömungsbereich fluidisch mit einer Verbindungsleitung oder einer Tankleitung und einer Abströmleitung verbunden ist, wobei der Innenraum fluidisch, zumindest mittelbar über eine Abzweigleitung, mit der Verbindungsleitung verbunden ist und wobei der Innenraum fluidisch zumindest mittelbar mit einer Rückführleitung verbunden ist und wobei eine Abscheidung eines Bestandteils des gasförmigen Mediums vom H₂ mittels der Membran erfolgt. Auf diese Weise kann durch die Trennung des Innenraums des Behälters von dem im Behälter angeordneten Strömungsbereich, der insbesondere fluidisch unmittelbar mit einem Anodenkreislauf eines Brennstoffzellensystems verbunden ist, verhindert werden, dass ein Großteil der Bestandteile des gasförmiges Mediums, bei denen es sich nicht um H₂ handelt, in den Anodenkreislauf des Brennstoffzellensystems zurückströmt. Somit kann der Wirkungsgrad des Brennstoffzellensystems verbessert werden, da der Anteil an H₂ im gasförmigen zu fördernden Medium im Anodenkreislauf erhöht wird, indem der Anteil an anderen Bestandteile als H₂, insbesondere Verunreinigungen und/oder Schmutzpartikeln, bei der Rückführung vom Innenraum zum Strömungsbereich im Behälter mittels der Membran reduziert wird. Die Membran kann zudem den Anteil an H₂O und N₂ zumindest zu einem Teil reduzieren, der in den Strömungsbereich zurückströmt, da die Membran derart einen Strömungswiderstand ausbildet, dass ein größere Anzahl an leichteren und/oder kleineren Partikel hindurch gelangen kann, während der Anteil an größere Teilen, die hindurch gelangen können, zumindest reduziert wird. Hierbei wirkt die Membran insbesondere wie ein grober Filter der zumindest das Hindurchgelangen von großen und/oder schweren Teilen reduziert. Zudem lässt sich der Vorteil erzielen, dass die Wahrscheinlichkeit einer Beschädigung der weiteren Komponenten des Anodenkreislaufs und/oder einer Brennstoffzelle und/oder das Rohrleitungssystems durch Verunreinigungen reduziert werden können, wodurch sich die Lebensdauer des gesamten Brennstoffzellensystems, insbesondere der Bauteile des Anodenkreislaufs, reduzieren lässt.

Die Unteransprüche betreffen bevorzugte Weiterbildungen der Erfindung.

Gemäß einer besonders vorteilhaften Ausgestaltung des Gas-Flüssigkeitsabscheiders ist die Membran als eine semipermeable Membran ausgeführt, wobei die Membran durchlässig gegenüber dem Bestandteil H₂ des Mediums ist und wobei die Membran undurchlässig gegenüber zumindest dem Bestandteil H₂O des Mediums ist, insbesondere aufgrund der Molekülgröße des jeweiligen Bestandteils. Zudem kann die Membran undurchlässig gegenüber dem Bestandteil N₂ des Mediums sein. Dabei wird zusätzlich zum flüssigen Bestandteil, insbesondere H₂O, ein gasförmiger Bestandteil N₂ vom Medium durch den Gas-Flüssigkeitsabscheider abgeschieden. Auf diese Weise kann der Vorteil erzielt werden, dass nicht nur Verunreinigungen aus dem Innenraum des Behälters nicht in den Strömungsbereich aufgrund der Membran strömen können, sondern darüber hinaus kann mittels der Membran zumindest eine nahezu vollständige Reduzierung des H₂O und/oder N₂ aus dem Innenraum in den Strömungsbereich und/oder den Anodenkreislauf zurückströmenden H₂O und N₂ erzielt wird. Auf diese Wiese lässt sich der Wirkungsgrad des Brennstoffzellensystems verbessern. Dabei dient die Membran nicht nur als Filter, durch den ein Zurückströmen von H₂O und N₂ in den Anodenkreislauf erschwert wird, sondern die Membran bildet eine derartige molekulare Struktur, insbesondere mit Öffnungen aus, durch die nahezu ausschließlich H₂ diffundieren kann. Somit lässt sich der Vorteil erzielen, dass nahezu ausschließlich H₂ vom Innenraum durch die Membran in den Strömungsbereich und somit zurück in den Anodenkreislauf strömt, wodurch sich der Wirkungsgrad der Brennstoffzelle verbessern lässt. Zudem können die Betriebskosten des Brennstoffzellensystems reduziert werden. Gemäß der Erfindung ist die Membran als eine Wandung einer zumindest teilweise im Behälter angeordneten ersten Strahlpumpe ausgebildet ist, wobei der Strömungsbereich innerhalb der Strahlpumpe verläuft und wobei die Strahlpumpe einen Ansaugbereich und/oder einen Diffusorbereich aufweist. Zudem bewirkt das im Anodenkreislauf befindliche gasförmige Medium beim Durchströmen des Ansaugbereichs einen Druckunterschied zwischen dem Strömungsbereich und dem Innenraum, wodurch ein Hindurchbewegen des Bestandteil H₂ durch die Membran unterstützt wird, insbesondere aufgrund eines erhöhten Druckgefälles. Zudem kann beim Gas-Flüssigkeitsabscheiders in einer beispielhaften Ausführungsform zusätzlich zur ersten Strahlpumpe eine zweite Strahlpumpe im Anodenkreislauf angeordnet sein, wobei die zweite Strahlpumpe zumindest mittelbar fluidisch mit der Tankleitung und/oder einer Zuströmleitung und/oder der Abströmleitung verbunden ist. Auf diese Weise kann der Vorteil erzielt werden, dass mittels der geometrischen Ausformung der ersten Strahlpumpe, insbesondere im Bereich einer Strahldüse, und/oder mittels eines erhöhten Drucks im zentralen Strömungsbereich der ersten Strahlpumpe eine erhöhte Strömungsgeschwindigkeit im zentralen Strömungsbereich erzielt werden kann, wodurch sich ein verstärkter Unterdruck im Bereich der Membran erzielen lässt. Somit erhöht sich das Druckgefälle vom zentralen Strömungsbereich zum Innenraum des Zwischenspeichers. Dabei kann sich insbesondere ein Druckunterschied von zumindest nahezu 10 bar einstellen. Somit lässt sich ein nahezu vollständiges Abscheiden der Bestandteile H₂O und N₂ vom Medium ermöglichen und/oder ein zumindest ein großer Anteil der Bestandteile H₂O und N₂ kann vom Medium abgeschieden werden. Dadurch kann gewährleistet werden, dass das Medium, dass über einen ersten Auslass aus dem mindestens einen Behälter durch die Abströmleitung in die Brennstoffzelle zurückgeführt wird, nahezu vollständig oder zumindest zum Großteil aus dem Bestandteil H₂ besteht und alle anderen Bestandteile, wie H₂O und N₂ und/oder Verschmutzungen nahezu vollständig durch die Membran herausgefiltert werden. Somit lässt sich der Wirkungsgrad der Brennstoffzelle steigern, da zur Energieerzeugung, insbesondere in einem Anodenbereich der Brennstoffzelle, nahezu ausschließlich H₂ benötigt wird. Weiterhin lässt sich auch der Wirkungsgrad einer Rezirkulations-Pumpe und einer integrierten Strahlpumpe steigern, die sich optional zwischen dem mindesten einen Behälter und der Brennstoffzelle befinden und die für einen kontinuierlichen Förderstrom zur Brennstoffzelle sorgen. Dies bietet den Vorteil, dass die Effizienz und/oder der Wirkungsgrad des gesamten Brennstoffzellensystems verbessert werden kann, wodurch die Betriebskosten reduziert werden können. Weiterhin kann aufgrund der Anordnung des Strömungsbereichs und des Innenraums des Wasserabscheiders in dem Behälter eine kompakte uns platzsparende Anordnung der Bauteile erzielt werden.

Gemäß einer vorteilhaften Ausgestaltung des Gas-Flüssigkeitsabscheiders befindet sich ein Absperrventil zwischen der Abzweigleitung oder der Verbindungsleitung und dem Innenraum des Behälters. Des Weiteren befindet sich ein Abführventil zwischen dem Innenraum des Behälters und der Rückführleitung. Auf diese Weise kann zum einen ein effizienteres Befüllen, je nach Bedarfsfall, insbesondere wenn der Anteil an H₂O und/oder N₂ und/oder Verschmutzungen im zu fördernden Medium erhöht ist. Zudem lässt sich der Vorteil erzielen, dass mittels des Abführventils verhindert wird, dass das gasförmige Medium aus dem Innenraum des Behälters entweicht, während sich noch ein erhöhter Anteil an H₂ darin befindet. Somit lässt sich der Wirkungsgrad des Brennstoffzellensystems verbessern, da weniger H₂ verloren geht und sich das H₂ zumindest nahezu vollständig mittels des Gas-Flüssigkeitsabscheiders zurückgewinnen lässt und dem Anodenkreislauf wieder zugeführt werden kann. Somit muss weniger H₂ beim Betrieb des Brennstoffzellensystem aus einem Tank nachgefördert werden, um die Brennstoffzelle zu betreiben, und es lässt sich der Vorteil erzielen, dass die Betriebskosten des Brennstofzellensystems und somit des Gesamtfahrzeugs gesenkt werden können, da weniger H₂ verbraucht wird. Auch lässt sich mittels des Abführventils und der Rückführleitung das H₂O und/oder N₂ aus dem Anodenkreislauf in den Kathodenkreislauf leiten, wo es beispielsweise zum Kühlen benötigt wird.

Gemäß einer besonders vorteilhaften Weiterbildung weist der Gas-Flüssigkeitsabscheider eine Sensorik auf, wobei die Sensorik, insbesondere kontinuierlich, Parameter der Verbindungsleitung erfasst und/oder Parameter des Innenraums des Behälters erfasst. Zudem können in einer beispielhaften Ausführungsform das Absperrventil und/oder das Abführventil, insbesondere zumindest mittelbar über eine Steuereinrichtung, mit der Sensorik verbunden sein. Auf diese Weise lässt sich der Vorteil erzielen, dass erfasst werden kann, welche Betriebszustände in dem Anodenkreislauf und/oder der Verbindungsleitung und/oder dem Innenraum bestehen, insbesondere die Konzentration von H₂ und/oder H₂O und/oder N₂ und/oder Verschmutzungen im gasförmigen Medium. Auf Basis dieser mittels der Sensorik erfassten Daten kann mittels der Steuereinrichtung das jeweilige Absperrventil und/oder Abführventil angesteuert werden. Die Steuereinrichtung wertet dabei die von der Sensorik erfassten Daten aus, beispielsweise mittels einer CPU, und steuert ein Öffnen oder Schließen des jeweiligen Ventils. Somit lässt sich steuern, wann der Innenraum geleert wird und/oder wie lange die Leerung des Innenraums andauert und somit die Restmenge in die Umgebung entweichen kann und/oder mittels der Rückführleitung in den Kathodenkreislauf zurückgeführt wird. Dies kann vorteilhaft sein, wenn im Kathodenkreislauf eine erhöhte Menge an H₂O und/oder N₂ benötigt wird, je nach Betriebszustand der Brennstoffzelle und des gesamten Brennstoffzellensystems. Zudem können die Betriebskosten des Gesamtfahrzeugs reduziert werden. Weiterhin kann beim Ablasses des gasförmigen Mediums aus dem Innenraum über das Abführventil mittels der Sensorik und/oder der Steuereinrichtung dafür gesorgt werden, dass die Wasserstoff-Konzentration im Medium nicht derart hoch ist, dass diese ein kritisches Gemisch ausbildet, wobei ein kritisches Gemisch insbesondere ab einem Verhältnis von 4% H₂ zu 96% Restgemisch entsteht.

Gemäß einer vorteilhaften Weiterbildung weist der Gas-Flüssigkeitsabscheider die Rezirkulations-Pumpe auf, wobei die Rezirkulations-Pumpe im Anodenkreislauf angeordnet ist. Auf diese Weise kann der Vorteil erzielt werden, dass bei einer hohen Bandbreite an Betriebszuständen, wie beispielsweise Leistungszustand der Brennstoffzelle und/oder Temperatur und/oder Volumenstrom und/oder Druck, des Brennstoffzellensystems ein konstanter Volumenstrom des zu fördernden Mediums zur Brennstoffzelle gelangen kann. Dabei wird mittels der Rezirkulations-Pumpe ein Volumenstrom erzeugt und/oder das gasförmige Medium in Zirkulation versetzt. Dies geschieht in einem Druckbereich und/oder Temperaturbereich und/oder Strömungszustand im Anodenkreislauf, bei dem die Strahlpumpe noch keine oder zumindest eine nicht beständige Förderung und/oder Zirkulationsströmung des gasförmigen Mediums durch den Anodenkreislauf zur Brennstoffzelle bewirken kann. Dies ist beispielsweise der Fall bei einem Kaltstart des Fahrzeugs, bei dem sich das gasförmige Medium im Anodenkreislauf zumindest nahezu im Ruhezustand befindet und die Temperaturen im Bereich des Gefrierpunkts liegen. Dabei wird mittels der Rezirkulations-Pumpe ein entsprechender Volumenstrom und/oder Druck im Anodenkreislauf aufgebaut, bis dieser jeweilige einen Wert erreicht bei dem auch die Strahlpumpe optimal fördern kann. Somit kann der Vorteil erzielt werden, dass zuverlässige Kaltstartfähigkeit des Gesamt-Fahrzeugs, auch bei einer langen Standzeit und niedrigen Außentemperaturen, insbesondere unter 0° Celsius, gewährleistet werden kann. Des Weiteren kann das Ansprechverhalten des gesamten Brennstoffzellensystems verbessert werden, beispielsweise bei einer spontanen Leistungsabfrage des Fahrers mittels eines Kickdowns, bei dem das Brennstoffzellensystem kurzfristig hohe elektrische Leistung, insbesondere die Maximalleistung des Fahrzeugs, erzeugen und somit mit Wasserstoff versorgt werden muss. Weiterhin kann der Wirkungsgrad und/oder die Leistung der Brennstoffzelle erhöht werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Zeichnung

Nachfolgend wird ein Ausführungsbeispiel der Erfindung unter Bezugnahme auf die begleitende Zeichnung im Detail beschrieben. In der Zeichnung ist:
- Figur 1: eine schematische Darstellung eines Brennstoffzellensystems mit einem erfindungsgemäßen Gas-Flüssigkeitsabscheider gemäß einem ersten Ausführungsbeispiel,
- Figur 2: eine perspektivische Schnittansicht einer Membran des Gas-Flüssigkeitsabscheiders,
- Figur 3: eine schematische Darstellung des Brennstoffzellensystems mit dem erfindungsgemäßen Gas-Flüssigkeitsabscheider gemäß einem zweiten Ausführungsbeispiel,

### Ausführungsform der Erfindung

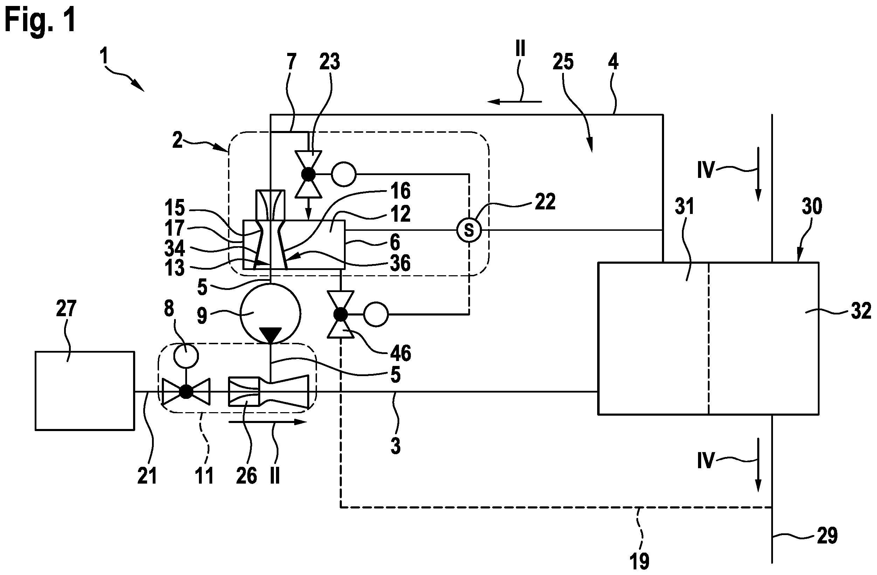

Die Darstellung gemäß **Fig.** 1 zeigt ein Brennstoffzellensystems 1 mit einem ersten Ausführungsbeispiel eines erfindungsgemäßen Gas-Flüssigkeitsabscheiders 2, wobei der Gas-Flüssigkeitsabscheider 2 zusätzlich zum flüssigen Bestandteil, insbesondere H₂O, einen gasförmiger Bestandteil N₂ vom Medium abscheidet. Dabei werden die Bestandteile H₂O und N₂ vom Medium, insbesondere vom Bestandteil H₂ des Mediums mittels des erfindungsgemäßen Gas-Flüssigkeitsabscheiders 2 abgeschieden.

In **Fig.** 1 wird das Brennstoffzellensystem 1 gezeigt, bei dem eine Brennstoffzelle 30, der Gas-Flüssigkeitsabscheiders 2 und eine optionale Rezirkulations-Pumpe 9 mittels Leitungen fluidisch miteinander verbunden sind. Die Brennstoffzelle 30 weist einen Anodenbereich 31 und einen Kathodenbereich 32 auf und dient zur insbesondere in einem Fahrzeug zur Energieerzeugung mittels einer Reaktion von Wasserstoff, also H₂, und Sauerstoff, also O₂. Dem Kathodenbereich 32 der Brennstoffzelle 30 wird dabei mittels eines Kathodenkreislaufs 29 in einer Strömungsrichtung IV Luft, insbesondere O₂ zugeführt. Der erfindungsgemäße Gas-Flüssigkeitsabscheider 2 ist dabei mit dem Anodenbereich 31 über eine Verbindungsleitung 4 fluidisch verbunden. Dabei wird eine Medium, wobei es sich insbesondere um ein Rezirkulationsmedium aus dem Anodenbereich 31 der Brennstoffzelle 30 handelt, zur Rezirkulation an den Gas-Flüssigkeitsabscheiders 2 geleitet. Das Rezirkulationsmedium besteht dabei nahezu vollständig aus unverbrauchten H₂, das innerhalb der Brennstoffzelle 30 nicht zur chemischen und/oder elektrischen Reaktion mit Sauerstoff gekommen ist, sowie den Abfallprodukten H₂O und N₂ aus dem Prozess zur Energiegewinnung innerhalb der Brennstoffzelle 30. Zudem können weitere Verschmutzungen im gasförmigen Medium vorhanden sein, beispielsweise Partikel der Brennstoffzelle 30 selber, die sich im Betrieb als kleine, insbesondere molekulare, Teilchen lösen und/oder herausbrechen und als Schmutz-Partikel im Anodenkreislauf vorliegen. Das Medium strömt dabei in einer Strömungsrichtung II der Anodenseite durch die Verbindungsleitung 4 zumindest indirekt in den Gas-Flüssigkeitsabscheider 2. Im Gas-Flüssigkeitsabscheiders 2 strömt das Medium dann entweder über die Verbindungsleitung 4 weiter in einen zentralen Strömungsbereich 13 einer ersten Strahlpumpe 10, die Teil des Gas-Flüssigkeitsabscheiders 2 ist. Alternativ kann das Medium auch über eine Abzweigleitung 7 und/oder ein Absperrventil 23 in einen Innenraum 12 wenigstens eines Behälters 6 des Gas-Flüssigkeitsabscheiders 2 strömen. Der Gas-Flüssigkeitsabscheider 2 dient dabei zum Abscheiden von zumindest einem flüssigem Bestandteil, insbesondere H₂O, von einem gasförmigen Bestandteil, insbesondere H₂. Der Behälter 6 weist dabei einen Innenraum 12 und den Strömungsbereich 13 auf, die mittels einer Membran 34 voneinander getrennt sind, wobei der Strömungsbereich 13 fluidisch mit der Verbindungsleitung 4 und einer Abströmleitung 5 verbunden ist. Der Innenraum 12 ist dabei fluidisch, zumindest mittelbar über die Abzweigleitung 7, mit der Verbindungsleitung 4 verbunden. Der Innenraum 12 ist zudem fluidisch zumindest mittelbar, insbesondere über ein Abführventil 46, mit einer Rückführleitung 19 verbunden. Über das Abführventil 46 kann mittels der Rückführleitung 19 das verbleibende Restmedium aus dem Innenraum 12 des Behälters 6 in einen Kathodenkreislauf 29 des Brennstoffzellensystems 1 überführt werden. Der Behälter 6 bildet dabei eine Behälterwand 17 aus, die den Innenraum 12 nach außen zur Umgebung begrenzt. Alternativ kann das das verbleibende Restmedium aus dem Innenraum 12 des Behälters 6 in die Umgebung des Brennstoffzellensystems 1 und/oder des Fahrzeugs abgelassen werden. Innerhalb des Behälters 6 des Gas-Flüssigkeitsabscheiders 2 erfolgt eine Abscheidung eines gasförmigen und/oder flüssigen Bestandteils des gasförmigen Mediums vom H₂ mittels der Membran 34. Die Membran 34 ist dabei als eine Wandung 36 der zumindest teilweise im Behälter 6 angeordneten ersten Strahlpumpe 10 ausgebildet ist, wobei der Strömungsbereich 13 innerhalb der Strahlpumpe 10 verläuft und wobei die Strahlpumpe 10 einen Ansaugbereich 15 und/oder einen Diffusorbereich 16 aufweist. Des Weiteren bewirkt das Medium beim Durchströmen des Ansaugbereichs 15 einen Druckunterschied zwischen dem Strömungsbereich 13 und dem Innenraum 12 aufgrund eines Strahlpumpeneffekts, wodurch ein Hindurchbewegen des Bestandteil H₂ durch die Membran 34 aus dem gasförmigen Medium im Innenraum 12 in den Strömungsbereich 13 unterstützt wird.

Zudem ist in **Fig.** 1 gezeigt, dass der erfindungsgemäße Gas-Flüssigkeitsabscheider 2 eine Sensorik 22 aufweist, wobei die Sensorik 22, insbesondere kontinuierlich, Parameter der Verbindungsleitung 4 erfasst und/oder Parameter des Innenraums 12 des Behälters 6 erfasst. Dabei ist das Absperrventil 23 und/oder das Abführventil 46, insbesondere zumindest mittelbar über eine Steuereinrichtung, mit der Sensorik 22 verbunden sind. Auf Basis dieser anhand der Sensorik 22 erfassten Daten kann mittels der Steuereinrichtung, das jeweilige Absperrventil 23 und/oder Abführventil 46 angesteuert werden. Die Steuereinrichtung wertet dabei die von der Sensorik 22 erfassten Daten aus, beispielsweise mittels einer CPU, und steuert die Öffnung und/oder Schließung des jeweiligen Ventils. Somit lässt sich steuern, wann der Innenraum 12 geleert wird. Die Sensorik 22 misst dabei beispielsweise die Konzentration der Bestandteile H₂O und N₂ und/oder weiterer Schmutz-Partikel im Innenraum 12 oder in einem Anodenkreislauf 25. Zudem kann mittels der Sensorik 22 ein Druck im Bereich des Innenraums 12 und/oder des restlichen Anodenkreislaufs 25 gemessen werden. Sobald die Sensorik 22 einen bestimmten Wert bezüglich der Konzentration der Bestandteile H₂O und N₂ und/oder einen Druck erfasst, erfolgt eine Ansteuerung des Abführventils 46 und die Bestandteile H₂O und N₂ und weitere Partikel werden mittels des Abführventils 46 abgelassen und/oder herausgeleitet. Das Abführventil 46 kann sich dabei gemäß einer beispielhaften Ausführungsform des Gas-Flüssigkeitsabscheiders 2 am tiefsten Punkt des Innenraums 12 des Behälters 6 angeordnet sein, um ein nahezu vollständiges Entleeren durch die Schwerkraft zu gewährleisten. Die Steuereinrichtung kann hierbei beispielsweise mittels einer elektrischen, mechanischen, elektronischen oder anders gearteten Aktorik für ein Öffnen und/oder Schließen des jeweiligen Ventils sorgen. Zudem ist eine stufenlose Öffnung und/oder Schließung des Ventils möglich, so dass nur ein geringer Volumenstrom des gasförmigen Mediums durch das jeweilige Ventil fließen kann. Prinzipiell kann eine Steuerung des Gas-Flüssigkeitsabscheiders 2 zur effizienten Verringerung von unerwünschten Anteilen, wie beispielsweise H₂O und N₂ und/oder Verschmutzungen, im gasförmigen Medium im Anodenkreislauf 25 in mehreren Schritten erfolgen. Im ersten Schritt, insbesondere wenn die Sensorik 22 erhöhte Werte von unerwünschten Anteilen im gasförmigen Medium im Anodenkreislauf 25 erfasst, wird das Absperrventil 23 mittels der Steuereinrichtung geöffnet, so dass ein Teil des im Anodenkreislauf 25, insbesondere in der Verbindungsleitung 4 vorhandenen gasförmigen Mediums in den Innenraum 12 des Behälters 6 eingeleitet wird. Sobald der Innenraum 12 befüllt ist, wobei beim Befüllen optional das Abführventil 46 geöffnet sein kann, wird das Absperrventil 23 geschlossen und das Abscheiden von H₂ mittels des Gas-Flüssigkeitsabscheiders 2 kann beginnen. Dabei wird das H₂ über die Membran 34 zurück in den Strömungsbereich 13 und somit den Anodenkreislauf 25 geleitet.

Dabei wird mittels der ersten Strahlpumpe 10, die insbesondere den Ansaugbereich 15 und den Diffusorbereich 16 im Bereich der Wandung 36 aufweist, ein Abscheiden des H₂ vom restlichen sich im Innenraum 12 des Behälters 6 befindlichen Mediums herbeigeführt und/oder unterstützt, insbesondere aufgrund des hohen Druckniveaus im Strömungsbereich 13 im Vergleich zum niedrigeren Druckniveau im Innenraum 12. Die Wandung 36 ist dabei zumindest teilweise als Membran 34 ausgebildet. Durch das in Strömungsrichtung II durch den Strömungsbereich 13 der ersten Strahlpumpe 10 strömende gasförmige Medium wird ein erhöhtes Druckgefälle zwischen dem Innenraum 12 und dem Strömungsbereich 13 erzeugt, insbesondere aufgrund der zumindest teilweisen pneumatischen und/oder fluidischen Trennung, wodurch ein Hindurchdiffundieren des H₂ durch die Membran 34 begünstigt wird und somit der Anteil an H₂ im Innenraum 12 schneller abnimmt und/oder eine größere Menge an H₂ aus dem Innenraum 12 zurück in den Anodenkreislauf 25 gelangen kann, insbesondere über den Strömungsbereich. Im nächsten Schritt, insbesondere bei einer geringen Restmenge an H₂ im Innenraum 12, wird das Abführventil 46 geöffnet, so dass der restliche Inhalt aus dem Behälter 6 entweichen kann. Unterstützend kann bei diesem Vorgang das Absperrventil 23 geöffnet werden, so dass der restliche Inhalt effizienter entweichen kann und beispielsweise erneut gasförmiges Medium aus dem Anodenkreislauf 25 nachströmen kann.

In **Fig.** 1 ist gezeigt, dass in diesem ersten Ausführungsbeispiel des Gas-Flüssigkeitsabscheiders 2 zusätzlich zur ersten Strahlpumpe 10 eine zweite Strahlpumpe 26 im Anodenkreislauf 25 angeordnet ist, wobei die zweite Strahlpumpe 26 zumindest mittelbar fluidisch mit einer Tankleitung 21 und/oder einer Zuströmleitung 3 und/oder der Abströmleitung 5 verbunden ist. Der zweiten Strahlpumpe 26 wird mittels eines Dosierventils 8 ein Treibmedium von einem Tank 27 über die Tankleitung 21 zudosiert. Gemeinsam bilden die zweiten Strahlpumpe 26 und das Dosierventil 8 eine integrierte Ventil-Strahlpumpeneinheit 11 aus, wobei insbesondere die Leitungslängen zwischen der zweiten Strahlpumpe 26 und dem Dosierventil 8 möglichst kurz ausgeführt sind. In dieser zweiten Strahlpumpe 26 wird in einem Mischbereich das, von der Rezirkulations-Pumpe 9 kommende, Rezirkulationsmedium gesammelt. Zum anderen strömt auf einem zweiten Strömungspfad von außerhalb der Ventil-Strahlpumpeneinheit 11 ein gasförmiges Treibmedium, insbesondere H₂, in die zweite Strahlpumpe 26 und/oder das Dosierventil 8 ein, wobei das Treibmedium vom Tank 27 kommend unter hohen Druck steht, insbesondere von mehr als 10 bar. Nun wird das Treibmedium mittels einer Aktorik des Dosierventils 8, insbesondere stoßweise, beispielsweisedurch eine Düse der zweiten Strahlpumpe 26 in den Mischbereich abgelassen. Das durch die Düse strömende und als Treibmedium dienende H₂ weist eine Druckdifferenz zum Rezirkulationsmedium auf. Damit sich ein sogenannter Strahlpumpeneffekt einstellt wird das Rezirkulationsmedium über die Abströmleitung 5 mit einem geringen Druck und einem geringen Massen-Strom in einen zweiten Strömungsbereich der zweiten Strahlpumpe 26 gefördert. Dabei strömt das Treibmedium mit der beschriebenen Druckdifferenz und einer hohen Geschwindigkeit, die insbesondere Nahe der Schallgeschwindigkeit liegen kann, durch die Düse in den Mischbereich ein. Nachdem das Rezirkulationsmedium in der zweiten Strahlpumpe 26 durch das Treibmedium beschleunigt wurde und sich beide Medien vermischt haben, strömt das neu entstandene Medium, bei dem es sich insbesondere nahezu vollständig um H₂ handelt, durch die Zuströmleitung 3 zur Brennstoffzelle 30, insbesondere zum Anodenbereich 31.

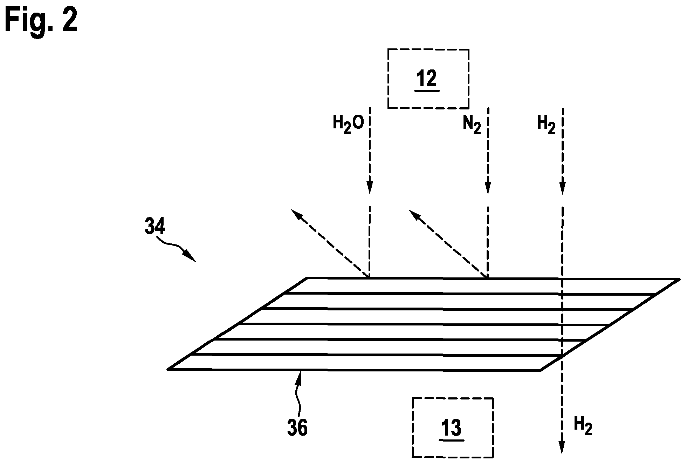

In **Fig.** 2 ist eine perspektivische Schnittansicht der Membran 34 des Gas-Flüssigkeitsabscheiders 2 gezeigt, die als Wandung 36 des Strömungsbereichs 13 dient. Die Membran 34 ist dabei als eine semipermeable Membran 34 ausgebildet, wobei die Membran 34, wie in **Fig.** 2 gezeigt, durchlässig gegenüber dem Bestandteil H₂ des Mediums ist und wobei die Membran 34 undurchlässig gegenüber den Bestandteilen H₂O und N₂ und weiteren Schmutzpartikeln des Mediums ist, insbesondere aufgrund der Molekülgröße des jeweiligen Bestandteils. Dabei sind die Bestandteile H₂O und/oder N₂ und/oder eventuell vorhandene Schmutz-partikel des Mediums zu groß, um durch die Struktur, insbesondere die Gitterstruktur der Membran 34 zu diffundieren, während der Bestandteile H₂ des Mediums klein genug ist, um durch die Struktur der Membran 34 zu diffundieren. Somit wird zusätzlich zum flüssigen Bestandteil, insbesondere H₂O, ein gasförmiger und/oder flüssiger Bestandteil N₂ und/oder Schmutzpartikel vom Medium durch den Gas-Flüssigkeitsabscheider 2 abgeschieden. Dabei strömt das gasförmige Medium vom Innenraum 12 kommend zur Membran 34 hin. Die Bestandteile H₂O und/oder N2 und/oder Schmutzpartikel können die Barriere Membran 34 nicht überwinden, während das H₂ durch die Membran 34 hindurchdiffundieren kann in den zentralen Strömungsbereich 13. Die Membran 34 bildet dabei zumindest teilweise die Wandung 36 der ersten Strahlpumpe 10 aus.

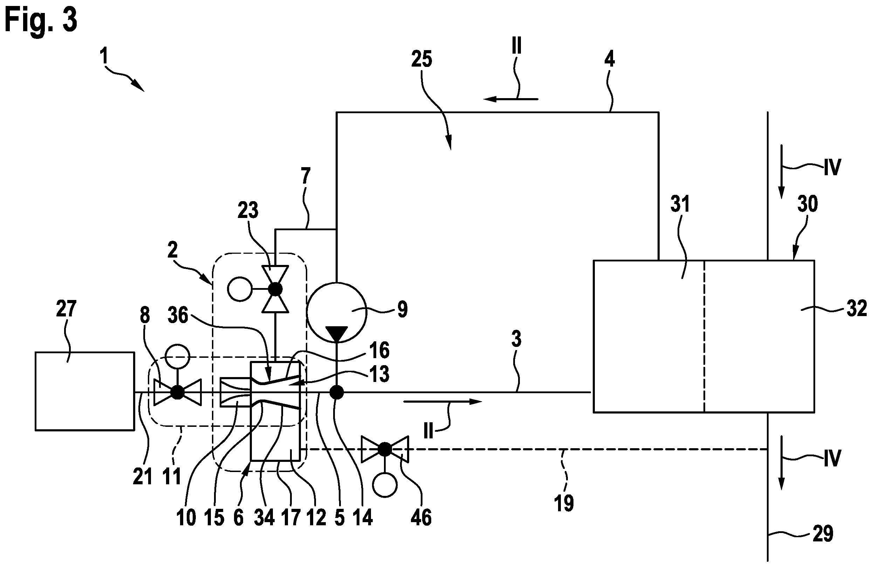

**Fig.** 3 zeigt eine schematische Darstellung des Brennstoffzellensystems 1 mit dem erfindungsgemäßen Gas-Flüssigkeitsabscheider 2 gemäß einem zweiten Ausführungsbeispiel. Hierbei weist der Anodenkreislauf 25 nur eine Strahlpumpe 10 auf, insbesondere die erste Strahlpumpe 10. Diese erste Strahlpumpe 10 ist dabei Teil des Gas-Flüssigkeitsabscheiders 2. Des Weiteren weist der Gas-Flüssigkeitsabscheider 2 wenigstens einen Behälter 6 auf, dem zumindest mittelbar über Abzweigleitung 7 und das Absperrventil 23 ein von der Brennstoffzelle 30 kommendes Medium zugeführt wird, wobei der Behälter 6 die Behälterwand 17 aufweist. Dabei erfolgt eine Abscheidung zumindest des flüssigen Bestandteils des Mediums im Behälter 6, wobei der abgeschiedene Bestandteil des Mediums über die Rückführleitung 19 aus dem Behälter 6 zum Kathodenkreislauf 29 abgeführt wird. Dabei kann sich das Abführventil 46 an der Rückführleitung 19 befinden Der Behälter 6 weist dabei den Innenraum 12 und den Strömungsbereich 13 auf, die mittels der Membran 34 voneinander getrennt sind, wobei der Strömungsbereich 13 fluidisch mit der Tankleitung 21, insbesondere über das Dosierventil 8, und der Abströmleitung 5 verbunden ist, wobei der Innenraum 12 fluidisch, zumindest mittelbar über die Abzweigleitung 7, insbesondere über das Absperrventil 23, mit der Verbindungsleitung 4 verbunden ist. Gemeinsam bilden in diesem zweiten Ausführungsbeispiel die erste Strahlpumpe 10 und das Dosierventil 8 die integrierte Ventil-Strahlpumpeneinheit 11 aus, wobei insbesondere die Leitungslängen zwischen der ersten Strahlpumpe 10 und dem Dosierventil 8 möglichst kurz ausgeführt sind. Die Strahlpumpe 10 ist dabei derart im Behälter 6 angeordnet, dass ihr zentraler Strömungsbereich 13 zumindest teilweise im Behälter 6 verläuft und zumindest teilweise mittels der Wandung 36 vom Innenraum 12 gekapselt ist, wobei die Wandung 36 zumindest teilweise als Membran 34 ausgebildet ist. In Strömungsrichtung weist der zentralen Strömungsbereich 13 zuerst Ansaugbereich 15 und dann den Diffusorbereich 16 auf, wobei sich im Bereich der Strahlpumpe 10 mittels dieser geometrischen Ausformung des Strömungsbereich 13 ein Strahlpumpeneffekt einstellt. Das vom Tank 27 kommende Medium strömt dabei unter einem hohen Druck stehend, insbesondere über 10 bar, durch den Strömungsbereich 13 hindurch. Dabei wird mittels der geometrischen Ausformung des Strömungsbereichs 13 der Strahlpumpe 10, insbesondere im Bereich einer Strahldüse, und/oder mittels eines erhöhten Drucks im zentralen Strömungsbereich 13 der Strahlpumpe 10 eine erhöhte Strömungsgeschwindigkeit im zentralen Strömungsbereich 13 erzielt werden kann, wodurch sich ein verstärkter Unterdruck im Bereich der Membran 34 erzielen lässt. Somit erhöht sich das Druckgefälle vom zentralen Strömungsbereich 13 zum Innenraum 12 des Zwischenspeichers. Somit wird mittels der erhöhten Druckdifferenz, wobei insbesondere ein hohes Druckniveau im Strömungsbereich 13 im Vergleich zum niedrigen Druckniveau im Innenraum 12 besteht, ein Abscheiden des H₂ vom restlichen sich im Innenraum 12 des Behälters 6 befindlichen Mediums herbeigeführt und/oder unterstützt. Die Wandung 36 ist dabei zumindest teilweise als Membran 34 ausgebildet. Durch das in Strömungsrichtung II durch den Strömungsbereich 13 der ersten Strahlpumpe 10 strömende gasförmige Medium wird ein erhöhtes Druckgefälle zwischen dem Innenraum 12 und dem Strömungsbereich 13 erzeugt, insbesondere aufgrund der zumindest teilweisen pneumatischen und/oder fluidischen Trennung, wodurch ein Hindurchdiffundieren des H₂ durch die Membran 34 begünstigt wird und somit der Anteil an H₂ im Innenraum 12 schneller abnimmt und/oder eine größere Menge an H₂ aus dem Innenraum 12 zurück in den Anodenkreislauf 25 gelangen kann, insbesondere über den Strömungsbereich. Weiterhin ist in **Fig.** 3 gezeigt, dass die Brennstoffzelle 30 den Anodenbereich 31 und den Kathodenbereich 32 aufweist. Dem Kathodenbereich 32 wird mittels über den Kathodenkreislauf 29 in der Strömungsrichtung IV Luft, insbesondere O₂, zugeführt.

In **Fig.** 3 ist zudem dargestellt, dass das Medium, wobei es sich insbesondere um das Rezirkulationsmedium aus dem Anodenbereich 31 der Brennstoffzelle 30 handelt, aus dem Anodenbereich 31 in Strömungsrichtung II über die Verbindungsleitung 4 und/oder die Abzweigleitung 7 an den Gas-Flüssigkeitsabscheider 2 geleitet, insbesondere in den Innenraum 12 des Behälters 6. Dabei kann das vom Anodenbereich 31 kommende gasförmige Medium entweder über die Verbindungsleitung 4 zu der Rezirkulations-Pumpe 9 strömen oder alternativ über die Abzweigleitung 7 von der Verbindungsleitung 4 vor der Rezirkulations-Pumpe 9 abgezweigt und über das Absperrventil 23 zum Gas-Flüssigkeitsabscheider 2 geleitet werden. Der Gas-Flüssigkeitsabscheider 2 und die Rezirkulations-Pumpe 9 sind dabei im Anodenkreislauf 25 vom Leitungssystem parallelgeschaltet und die jeweilige Leitung, wie beispielsweise die von dem Gas-Flüssigkeitsabscheider 2 kommende Abströmleitung 5, werden jeweils an einem Knoten 14 wieder zusammengeführt. Vom Knoten 14 strömt das vermischte gasförmige Medium dann in Strömungsrichtung II über die Zuströmleitung 3 in den Anodenbereich 31 der Brennstoffzelle 30.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich.

## Patentansprüche

1. Gas-Flüssigkeitsabscheider (2) in einem Anodenkreislauf (25) einer Brennstoffzelle (30) zum Abscheiden von zumindest einem flüssigem Bestandteil, insbesondere H₂O, von einem gasförmigen Bestandteil, insbesondere H₂, mit wenigstens einem Behälter (6), dem zumindest mittelbar über eine Verbindungsleitung (4) ein Medium von einem Anodenbereich (31) der Brennstoffzelle (30) zugeführt wird und/oder ein Medium, insbesondere ein Treibmedium, über ein Dosierventil (8) mittels einer Tankleitung (21) von einem Tank (27) zugeführt wird, wobei eine Abscheidung zumindest des flüssigen Bestandteils des Mediums im Behälter (6) erfolgt, wobei der abgeschiedene Bestandteil des Mediums über eine Rückführleitung (19) aus dem Behälter (6) abgeführt wird, und der verbleibende gasförmige Bestandteil des Mediums, insbesondere H₂, über eine Abströmleitung (5) zum Anodenbereich (31) zurückgeführt wird, **dadurch gekennzeichnet, dass** der Behälter (6) einen Innenraum (12) und einen Strömungsbereich (13) aufweist, die mittels einer Membran (34) voneinander getrennt sind, wobei der Strömungsbereich (13) fluidisch mit der Verbindungsleitung (4) oder der Tankleitung (21) und der Abströmleitung (5) verbunden ist, wobei der Innenraum (12) fluidisch, zumindest mittelbar über eine Abzweigleitung (7), mit der Verbindungsleitung (4) verbunden ist und wobei der Innenraum (12) fluidisch zumindest mittelbar mit der Rückführleitung (19) verbunden ist und wobei eine Abscheidung eines Bestandteils des gasförmigen Mediums vom H₂ mittels der Membran (34) erfolgt, wobei die Membran (34) als eine Wandung (36) einer zumindest teilweise im Behälter (6) angeordneten ersten Strahlpumpe (10) ausgebildet ist, wobei der Strömungsbereich (13) innerhalb der Strahlpumpe (10) verläuft und wobei die Strahlpumpe (10) einen Ansaugbereich (15) und/oder einen Diffusorbereich (16) aufweist.

2. Gas-Flüssigkeitsabscheider (2) nach Anspruch 1, **dadurch gekennzeichnet, dass** die Membran (34) als eine semipermeable Membran (34) ausgeführt ist, wobei die Membran (34) durchlässig gegenüber dem Bestandteil H₂ des Mediums ist und wobei die Membran (34) undurchlässig gegenüber zumindest dem Bestandteil H₂O des Mediums ist, insbesondere aufgrund der Molekülgröße des jeweiligen Bestandteils.

3. Gas-Flüssigkeitsabscheider (2) nach Anspruch 2, **dadurch gekennzeichnet, dass** die Membran (34) undurchlässig gegenüber dem Bestandteil N₂ des Mediums ist und somit zusätzlich zum flüssigen Bestandteil, insbesondere H₂O, ein gasförmiger Bestandteil N₂ vom Medium durch den Gas-Flüssigkeitsabscheider (2) abgeschieden wird

4. Gas-Flüssigkeitsabscheider (2) nach einem der vorrangegangenen Ansprüche,
**dadurch gekennzeichnet, dass** das Medium beim Durchströmen des Ansaugbereichs (15) einen Druckunterschied zwischen dem Strömungsbereich (13) und dem Innenraum (12) bewirkt, wodurch ein Hindurchbewegen des Bestandteil H₂ durch die Membran (34) unterstützt wird.

5. Gas-Flüssigkeitsabscheider (2) nach einem der vorrangegangenen Ansprüche,
**dadurch gekennzeichnet, dass** sich ein Absperrventil (23) zwischen der Abzweigleitung (7) oder der Verbindungsleitung (4) und dem Innenraum (12) des Behälters (6) befindet.

6. Gas-Flüssigkeitsabscheider (2) nach einem der vorrangegangenen Ansprüche,
**dadurch gekennzeichnet, dass** sich ein Abführventil (46) zwischen dem Innenraum (12) des Behälters (6) und der Rückführleitung (19) befindet.

7. Gas-Flüssigkeitsabscheider (2) nach einem der vorrangegangenen Ansprüche,
**dadurch gekennzeichnet, dass** dieser eine Sensorik (22) aufweist, wobei die Sensorik (22), insbesondere kontinuierlich, Parameter der Verbindungsleitung (4) erfasst und/oder Parameter des Innenraums (12) des Behälters (6) erfasst.

8. Gas-Flüssigkeitsabscheider (2) nach Anspruch 5 bis 7, **dadurch gekennzeichnet, dass** das Absperrventil (23) und/oder das Abführventil (46), insbesondere zumindest mittelbar über eine Steuereinrichtung, mit der Sensorik (22) verbunden sind.

9. Gas-Flüssigkeitsabscheider (2) nach einem der vorrangegangenen Ansprüche, **dadurch gekennzeichnet, dass** eine Rezirkulations-Pumpe (9) im Anodenkreislauf (25) angeordnet ist.

10. Gas-Flüssigkeitsabscheider (2) nach einem der vorrangegangenen Ansprüche, **dadurch gekennzeichnet, dass** zusätzlich zur ersten Strahlpumpe (10) eine zweite Strahlpumpe (26) im Anodenkreislauf (25) angeordnet ist, wobei die zweite Strahlpumpe (26) zumindest mittelbar fluidisch mit der Tankleitung (21) und/oder einer Zuströmleitung (3) und/oder der Abströmleitung (5) verbunden ist.

11. Brennstoffzellensystem (1) umfassend einen Gas-Flüssigkeitsabscheider (2) nach einem der vorhergehenden Ansprüche zum Steuern einer Wasserstoffzufuhr zu und/oder Wasserstoffabfuhr von der Brennstoffzelle (30).

## Claims

1. Gas-liquid separator (2) in an anode circuit (25) of a fuel cell (30) for separation of at least one liquid constituent, in particular H₂O, from a gaseous constituent, in particular H₂, having at least one vessel (6) which is supplied at least indirectly via a connecting conduit (4) with a medium from an anode region (31) of the fuel cell (30), and/or a medium, in particular a motive medium, is supplied from a tank (27) via a metering valve (8) by means of a tank conduit (21), where at least the liquid constituent of the medium is separated out in the vessel (6), where the separated constituent of the medium is discharged from the vessel (6) via a return conduit (19), and the remaining gaseous component of the medium, in particular H₂, is returned to the anode region (31) via a discharge conduit (5), **characterized in that** the vessel (6) has an interior (12) and a flow region (13) that are separated from one another by means of a membrane (34), where the flow region (13) is fluidically connected to the connecting conduit (4) or the tank conduit (21) and the outflow conduit (5), where the interior (12) is at least indirectly fluidically connected to the connecting conduit (4) via a branch conduit (7), and where the interior (12) is at least indirectly fluidically connected to the return conduit (19) and where a constituent of the gaseous medium is separated from the H₂ by means of the membrane (34), where the membrane (34) takes the form of a wall (36) of a first jet pump (10) disposed at least partly within in the vessel (6), where the flow region (13) runs within the jet pump (10) and where the jet pump (10) has an intake region (15) and/or a diffuser region (16).

2. Gas-liquid separator (2) according to Claim 1, **characterized in that** the membrane (34) is designed as a semipermeable membrane (34), where the membrane (34) is permeable to the H₂ constituent of the medium and where the membrane (34) is impermeable to at least the H₂O constituent of the medium, particularly because of the molecular size of the particular constituent.

3. Gas-liquid separator (2) according to Claim 2, **characterized in that** that the membrane (34) is impermeable to the N₂ constituent of the medium and hence, in addition to the liquid constituent, in particular H₂O, a gaseous N₂ constituent is separated from the medium by the gas-liquid separator (2).

4. Gas-liquid separator (2) according to any of the preceding claims, **characterized in that** the medium, as it flows through the intake region (15), causes a pressure difference between the flow region (13) and the interior (12), which assists movement of the H₂ constituent back and forth through the membrane (34).

5. Gas-liquid separator (2) according to any of the preceding claims, **characterized in that** a barrier valve (23) is present between the branch conduit (7) or the connecting conduit (4) and the interior (12) of the vessel (6).

6. Gas-liquid separator (2) according to any of the preceding claims, **characterized in that** a discharge valve (46) is present between the interior (12) of the vessel (6) and the return conduit (19).

7. Gas-liquid separator (2) according to any of the preceding claims, **characterized in that** it has a sensor system (22), where the sensor system (22), in particular continuously, detects parameters of the connecting conduit (4) and/or detects parameters of the interior (12) of the vessel (6).

8. Gas-liquid separator (2) according to Claims 5 to 7, **characterized in that** the barrier valve (23) and/or the discharge valve (46) are in particular connected at least indirectly to the sensor system (22) via a control device.

9. Gas-liquid separator (2) according to any of the preceding claims, **characterized in that** a recirculation pump (9) is disposed in the anode circuit (25).

10. Gas-liquid separator (2) according to any of the preceding claims, **characterized in that**, in addition to the first jet pump (10), a second jet pump (26) is disposed in the anode circuit (25), where the second jet pump (26) is at least indirectly fluidically connected to the tank conduit (21) and/or an inflow conduit (3) and/or the outflow conduit (5).

11. Fuel cell system (1) comprising a gas-liquid separator (2) according to any of the preceding claims for controlling supply of hydrogen to and/or removal of hydrogen from the fuel cell (30).

## Revendications

1. Séparateur gaz-liquide (2) dans un circuit d'anode (25) d'une pile à combustible (30) pour séparer au moins un constituant liquide, notamment H₂O, d'un constituant gazeux, notamment H₂, avec au moins un récipient (6) auquel est amené au moins indirectement par l'intermédiaire d'une conduite de liaison (4) un milieu provenant d'une zone d'anode (31) de la pile à combustible (30) et/ou est amené un milieu, notamment un milieu propulseur, provenant d'un réservoir (27) par l'intermédiaire d'une soupape de dosage (8) au moyen d'une conduite de réservoir (21), une séparation d'au moins le constituant liquide du milieu s'effectuant dans le récipient (6), le constituant séparé du milieu étant évacué du récipient (6) par l'intermédiaire d'une conduite de retour (19), et le constituant gazeux restant du milieu, notamment H₂, étant ramené à la zone d'anode (31) par l'intermédiaire d'une conduite de sortie (5), **caractérisé en ce que** le récipient (6) présente un espace intérieur (12) et une zone d'écoulement (13) qui sont séparés l'un de l'autre au moyen d'une membrane (34), la zone d'écoulement (13) étant reliée fluidiquement à la conduite de liaison (4) ou à la conduite de réservoir (21) et à la conduite de sortie (5), l'espace intérieur (12) étant relié fluidiquement, au moins indirectement par l'intermédiaire d'une conduite de dérivation (7), à la conduite de liaison (4), et l'espace intérieur (12) étant relié fluidiquement au moins indirectement à la conduite de retour (19), et une séparation d'un constituant du milieu gazeux du H₂ s'effectuant au moyen de la membrane (34), la membrane (34) étant réalisée sous la forme d'une paroi (36) d'une première pompe à jet (10) agencée au moins partiellement dans le récipient (6), la zone d'écoulement (13) s'étendant à l'intérieur de la pompe à jet (10), et la pompe à jet (10) présentant une zone d'aspiration (15) et/ou une zone de diffusion (16).

2. Séparateur gaz-liquide (2) selon la revendication 1, **caractérisé en ce que** la membrane (34) est conçue sous la forme d'une membrane semi-perméable (34), la membrane (34) étant perméable au constituant H₂ du milieu et la membrane (34) étant imperméable au moins au constituant H₂O du milieu, notamment en raison de la taille moléculaire du constituant respectif.

3. Séparateur gaz-liquide (2) selon la revendication 2, **caractérisé en ce que** la membrane (34) est imperméable au constituant N₂ du milieu et ainsi, en plus du constituant liquide, notamment H₂O, un constituant gazeux N₂ est séparé du milieu à travers le séparateur gaz-liquide (2).

4. Séparateur gaz-liquide (2) selon l'une quelconque des revendications précédentes, **caractérisé en ce que** le milieu, lorsqu'il s'écoule à travers la zone d'aspiration (15), provoque une différence de pression entre la zone d'écoulement (13) et l'espace intérieur (12), ce qui favorise le passage du constituant H₂ à travers la membrane (34).

5. Séparateur gaz-liquide (2) selon l'une quelconque des revendications précédentes, **caractérisé en ce qu'**une soupape d'arrêt (23) se trouve entre la conduite de dérivation (7) ou la conduite de liaison (4) et l'espace intérieur (12) du récipient (6).

6. Séparateur gaz-liquide (2) selon l'une quelconque des revendications précédentes, **caractérisé en ce qu'**une soupape d'évacuation (46) se trouve entre l'espace intérieur (12) du récipient (6) et la conduite de retour (19).

7. Séparateur gaz-liquide (2) selon l'une quelconque des revendications précédentes, **caractérisé en ce que** celui-ci présente un système de détection (22), le système de détection (22) détectant, notamment en continu, des paramètres de la conduite de liaison (4) et/ou détectant des paramètres de l'espace intérieur (12) du récipient (6).

8. Séparateur gaz-liquide (2) selon les revendications 5 à 7, **caractérisé en ce que** la soupape d'arrêt (23) et/ou la soupape d'évacuation (46) sont reliées, notamment au moins indirectement par l'intermédiaire d'un dispositif de commande, au système de détection (22).

9. Séparateur gaz-liquide (2) selon l'une quelconque des revendications précédentes, **caractérisé en ce qu'**une pompe de recirculation (9) est agencée dans le circuit d'anode (25).

10. Séparateur gaz-liquide (2) selon l'une quelconque des revendications précédentes, **caractérisé en ce qu'**en plus de la première pompe à jet (10), une deuxième pompe à jet (26) est agencée dans le circuit d'anode (25), la deuxième pompe à jet (26) étant reliée fluidiquement au moins indirectement à la conduite de réservoir (21) et/ou à une conduite d'entrée (3) et/ou à la conduite de sortie (5).

11. Système de pile à combustible (1) comprenant un séparateur gaz-liquide (2) selon l'une quelconque des revendications précédentes pour commander une amenée d'hydrogène vers et/ou une évacuation d'hydrogène de la pile à combustible (30).
